# EUROPEAN PATENT SPECIFICATION

(11) **EP 0 966 137 B1**
(45) Date of publication and mention of the grant of the patent: **15.02.2006**
(21) Application number: 98117658.9
(22) Date of filing: 17.09.1998
(51) Int. Cl.: H04M 1/00, H04Q 7/32

(54) **Method and apparatus for updating data in an electrical device**
Verfahren und Gerät zur Aktualisierung von Textdaten für eine elektrische Einrichtung
Procédé et dispositif pour la mise à jour des données texte pour un appareil électrique

(30) Priority: 17.06.1998 EP 98111081
(43) Date of publication of application: 22.12.1999
(73) Proprietor: SIEMENS AKTIENGESELLSCHAFT, 80333 München (DE)
(72) Inventor: Rysgaard, Bent, 9220 Aalborg (DK); Hoejlund, Joern, 9220 Aalborg (DK); Tanner Sorensen, Bjarne, 9490 Pandrup (DK)

(56) References cited:
- EP-A- 0 804 045
- EP-A- 0 804 046
- EP-A- 0 836 340
- WO-A-92/17002
- WO-A-96/39787
- WO-A-97/38542
- DE-C- 19 618 218
- US-A- 5 761 618

## Description

### Prior Art

The invention proceeds from a method for updating data in an electrical device or an electrical device in accordance with the generic class of the independent patent claims.

It is already well known to update a complete software package of an electrical device such as for example the mobile phone GSM-COM 607 from Bosch Telecom. Thereby, the complete software package comprises source code which has to be compiled and linked. The GSM-COM 607 mobile phone comprises a display unit as a man machine interface (MMI) to display text data. It also comprises a memory unit to store the software package and the text data. Thereby, the text data make part of the software package and are stored in the memory unit in memory locations contributed during the linking process. Therefore, the memory locations used for storage of text data may differ after each new update process. If in an update process only text data have to be changed, the whole software package including also source code has to be recompiled and linked whereby new memory locations are contributed to the new text data in the memory unit of the mobile phone.

DE 196 18 218 C1 uses for reconfiguring data on the SIM-card of a mobile phone an update short message which is characterized by a header containing a specific, predefined source address. Only if a short message with such a specific source address is detected by a special filter of the SIM-card, reconfiguration of the SIM-card is executed.

### Advantages of the invention

The method for updating data in an electrical device and the electrical device having the characterizing features of the independent patent claims have the advantage of a predefined memory area in the memory unit to store the data. Therefore, the storage positions to store data in the electrical device are already known and may be referenced by a header comprising address data to access the data in the predefined memory area. If only data such as p.ex. text data and/or character set data have to be updated, it is not necessary to update the complete software package because the memory locations of the data in the memory unit may be accessed without linking process because of the known and predefined memory area to store the data in the electrical device.

The file to be transmitted is generated with a header containing address information addressing at least one memory location to be updated of the predefined memory area containing at least two memory locations being sequentially arranged in the predefined memory area for storing data groups of different languages. Further the file contains identification information for identifying the selected language of the at least one data group to be updated. After transmission of the file to the electrical device each data group of different language to be updated of the file is stored in the at least two memory locations of the predefined memory area according to the address information in the header of the transmitted file. This allows an effective memory management when data have to be stored in different languages.

The features of the dependent patent claims enable further improvements of the invention.

It is very advantageous if the step of generating the file further comprises the provision of language information data as identification data comprising a number and/or list of languages, and a language pointer to an array of at least one address addressing at least one memory location of the memory area for storage of at least one data group, whereby in each memory location only data of one language are stored. This feature allows an effective memory management when data have to be stored in different languages for users of different countries. Adding data in a new language or changing data of one language may be easily performed without changing the complete software package including source code and may easily be referenced in the memory area of the electrical device by providing corresponding addresses and other identification data in the header.

A further advantage consists in transmitting the file via an air interface and/or cable from a central station to the electrical device. As only data without executable code is transferred from the central station to the electrical device, the electrical device is prevented from uncontrolled program execution by receiving the update data. As only data such as p.ex. text data and/or character set data are transmitted, there will be no possibility for criminals to access security data as for example a personal identification number (PIN) .Such security data would be transferred from the central station to the electrical device in case of the update of the complete software package.

Another advantage consists in the provision of at least two memory locations of the memory area which are arranged sequentially in the memory area and which contain data of different languages, whereby the data especially are stored in a packed data mode and free memory space is provided at least between the memory locations containing data of different languages. Therefore, the access of data of different languages can easily be realized without accessing conflict.

It is further advantageous that the header is stored on a predetermined memory location of the memory area, especially at the beginning of the memory area. Therefore, also the header data may be accessed easily and without data access conflict.

Providing identification information data in the header identifying data, especially of different languages, in the different memory locations, the access of data in the memory locations will also be error free.

### Drawings

An example of the invention is shown in the figures and explained in greater detail in the description below. Figure 1 shows a block diagram of a central station and an electrical device during an update of text data, figure 2 shows the organization of a memory area for storage of the text data and figure 3 shows an arrangement of text data groups in a memory location of the memory area.

### Description

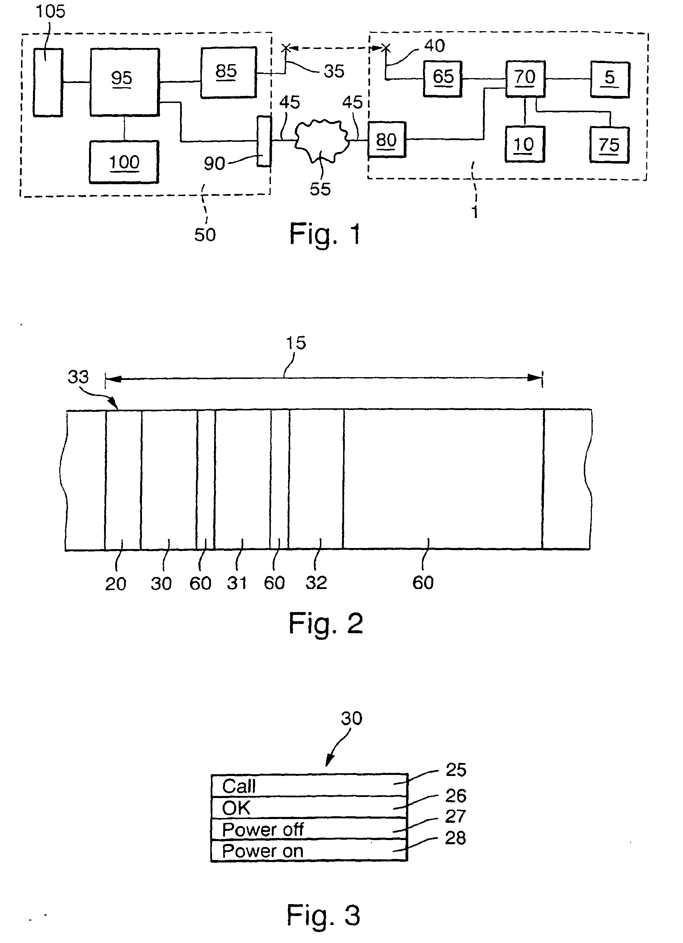

Figure 1 shows an electrical device 1 such as a car radio, a telecommunications device as for example a mobile phone, or the like. In the following description, the electrical device 1 will be referenced as a mobile phone. The mobile phone 1 comprises a first antenna 40 which is connected to a first transmitter/receiver unit 65. The first transmitter/receiver unit 65 is connected to a control unit 70 of the mobile phone 1. A first display 5, a first keyboard 75, a memory unit 10 and a first network interface unit 80 of the mobile phone 1 are also connected to the control unit 70. Figure 1 shows also a central station 50 which could be a base station, a personal computer (PC) or the like. The central station 50 comprises a second antenna 35 which is connected to a second transmitter/receiver unit 85 of the central station 50. The second transmitter/receiver unit 85 is connected to a processor 95 of the central station 50. A second display 105, a second keyboard 100, and a second network interface unit 90 of the central station 50 are also connected to the processor 95. Via cables 45 and a telecommunications network 55, the second network interface unit 90 is connected to the first network interface unit 80.

The first display 5 may be considered as a man machine interface (MMI) which allows the user of the mobile phone 1 to activate functions of the mobile phone 1 or to get informations. As the mobile phone 1 should be usable by users speaking different languages, text data displayed on the first display 5 should be provided in different languages selectively. Thereby, text data indicating selectable functions of the mobile phone 1 which can be displayed on the first display 5 for example on a menu surface, are stored in the memory unit 10.

The memory unit 10 contains a predefined and fixed memory area 15 according to figure 2 to store the text data of the different languages. Thereby, the memory area 15 is divided into a first memory location 33 containing header information data 20, further referenced as the header. The header 20 in the memory area 15 is followed by a second memory location 30, a third memory location 31, and a fourth memory location 32. The second, the third, and the fourth memory location 30, 31, 32 are arranged sequentially in the memory area 15. Between the second memory location 30 and the third memory location 31, there is provided a free memory space 60 as well as between the third memory location 31 and the fourth memory location 32. It would also be possible, not to provide free memory space 60 between adjacent memory locations as it can be seen between the first memory location 33 and the second memory location 30. It is, of course, also possible to provide free memory space 60 between the first memory location 33 and the second memory location 30. In the second, the third and the fourth memory location 30, 31, 32, text data of different languages are stored. Each of the second, the third, and the fourth memory location 30, 31, 32 comprises text data of only one language.

Figure 3 shows an example for the second memory location 30 which is divided into four text data groups 25, 26, 27, 28. Thereby, in this example, the second memory location 30 contains only text data of the English language. A first text data group 25 of the second memory location 30 comprises the text "call" to indicate a call initiating function of the mobile phone 1 on the first display 5. A second text data group 26 of the second memory location 30 comprises the text "O.K." to indicate an acknowledgement function of the mobile phone 1 on the first display 5. A third text data group 27 of the second memory location 30 contains the text "Power off" to indicate a turn off function of the mobile phone 1 on the first display 5. A fourth text data group 28 of the second memory location 30 comprises the text "Power on" to indicate a turn on function of the mobile phone 1 on the first display 5.

Via the first keyboard 75 the user of the mobile phone 1 may first select a language on a language menu displayed on the first display 5. The header 20 therefore may comprise a list of the provided languages for the text data stored in the memory area 15. Additionally or alternatively the header may comprise the number of languages of the text data stored in the memory area 15. With the number and/or the name of the selected language in the list of languages, the memory location 30 ,31, 32 containing the text data of the selected language can be identified. The header 20 further comprises a language pointer to an array of the memory addresses of the second, the third, and the fourth memory location 30 ,31, 32. According to the selected language, identified by the number and/or name of the language, the address of the corresponding memory location is selected and thereby, the text data groups of the selected language can be accessed and displayed on the first display 5 subsequently or commonly to offer functions of the mobile phone 1 to be activated by the user via the first keyboard 75.

The first memory location 33 for storage of the header 20 is predetermined in the memory area 15, that means that its position is fixed and may especially be at the beginning of the memory area 15. It is also possible to fix the first memory location 33 on another position of the memory area 15. The positions and the stored addresses in the header 20 of the memory locations containing text data groups in the memory area 15 depend on the number of provided languages and are referenced via the address array in the header 20. The memory space after the last memory location in the memory area 15 is also free memory space 60 which can be used to store text data in additional languages if the remaining memory space is large enough.

In the header 20 may also be provided as part of the language information data character sets for the different languages used by the corresponding text data groups in the second, the third, and the fourth memory location 30, 31, 32. The character sets thereby are related for example by number to the corresponding language or memory location so that in case one language is selected by the user the text data of this language are displayed on the first display 5 according to the corresponding character set, whereby the control unit 70 processes and transfers the text data from the memory unit 10 to the first display 5.

In the case, the user of the mobile phone 1 wants to change text data of one or more languages stored in the memory area 15 or to add corresponding text data groups in a new language not yet provided by the memory area 15 of the mobile phone 1, he may dial a telephone number of a service provider via the first keyboard 75. The control unit 70 then initiates a call either via the first transmitter/receiver unit 65 and the first antenna 40 or via the first network interface unit 80 to the central station 50 at the service provider. The central station 50 receives the call from the mobile phone 1 via the second antenna 35 and the second transmitter/receiver unit 85 if the call was initiated by the first transmitter/receiver unit 65. The central station 50 receives the call via the second network interface unit 90 if the call was initiated by the mobile phone 1 via the first network interface unit 80. An agent at the central station 50 can answer the call via the processor 95 utilizing an acoustic interface connected to the processor 95 and not shown in figure 1. The acoustic interface thereby may comprise a microphone and a loudspeaker. Such an acoustic interface may also be provided at the mobile phone 1, even if not shown in figure 1, and be connected to the control unit 70. Therefore, a communication between the agent and the user of the mobile phone 1 can be realized whereby the user of the mobile phone 1 can tell the agent at the central station 50 which text data groups he wants to have changed and/or which new language he wants to have provided in the memory area 15 of the mobile phone 1 for the text data.

According to the wishes of the user of the mobile phone 1 the agent at the central station 50 may generate a text file at the second keyboard 100, the text file being monitored for control purposes via the processor 95 at the second display 105. Such a text file comprises the disposable text data groups according to the functions which may be realized by the mobile phone 1 in each language desired by the user. The text of the text data groups will also be adapted according to the wishes of the user of the mobile phone 1.

The user of the mobile phone 1 could for example wish the expression "turn off" instead of the expression "power off" according to the third text data group 27 of the English language version of the second memory location 30 according to figure 3. The text file generated at the central station 50 also contains the header 20 with the corresponding address and language identification information. The text file is then transmitted either via the air interface of the second antenna 35 and the first antenna 40 or via the telecommunications network 55 to the mobile phone 1 and transferred via the control unit 70 to the memory unit 10. Thereby, the text file will be stored in the fixed and predefined memory area 15 of the memory unit 10 according to the scheme described above with reference to figure 2. That means, that the header 20 will be stored at a predefined and fixed position of the memory area 15 especially at the beginning of the memory area 15 followed by the memory locations containing the updated text data groups, whereby the memory locations are positioned in the memory area 15 according to the address information in the address array of the header 20 and where the number of memory locations containing text data groups corresponds to the updated number of languages. The memory locations containing the text data groups are arranged sequentially in the memory area 15 and can optionally being separated by the free memory space 60 respectively. A free memory space 60 may also be provided between the header 20 and the following memory location containing text data groups. The text data may be stored optionally in a packed data mode to save memory space. The storage of text data in a packed data mode requires a program to unpack the text data before displaying them on the first display 5. The unpacking of the text data may be controlled by the control unit 70.

Instead of a telecommunications network 55, a data cable may be used to connect the first network interface unit 80 with the second network interface unit 90. In this way, the mobile phone 1 may be connected directly to the central station 50 which may be a PC and the text file may be downloaded from the PC to the mobile phone 1 via this data cable. In another example of the invention, the telecommunications network 55 may comprise the internet.

Before transmission from the central station 50 to the mobile phone 1, the text file is compiled by the processor 95 at the central station 50. The text data thereby may be provided as strings in the text file. As the position in the memory unit 10 of the mobile phone 1 to store the text file is predefined and fixed, no linkage process is necessary and the precompiled text file can be transmitted to the mobile phone 1 and stored in the predefined and fixed memory area 15 of the memory unit 10.

The communication between the central station 50 and the mobile phone 1 to define the requirements of the user of the mobile phone 1 concerning languages and wordings of text data groups and the transmission of the resulting text file from the central station 50 to the mobile phone 1 does not require acoustic communication between the agent and the user but may also be based on simple data transfer via the air interface 35, 40 and/or the telecommunications network 55. The transfer of text data groups from the central station 50 to the mobile phone 1 may not only be initiated by the mobile phone 1 but also by the central station 50.

According to the wishes of the user of the mobile phone 1 text data groups of one or more languages may be added, deleted or changed in comparison to the text data already stored in the memory area 15 of the memory unit 10 by generating a new text file at the central station 50.

The memory area 15 of the memory unit 10 thereby may be realized as RAM, EEPROM, PROM, FLASH-PROM, an optical or magnetical disc, etc. Advantageously a non volatile memory is used for the memory area 15.

The generation of new text files with updated text data is limited in size by the size of the memory area 15 which has to be known at the central station 50.

In the same way as described above for the text data, character set data may be ordered by the user of the mobile phone 1 at the central station 50. As described above for the text data, the desired character set data may then be transmitted from the central station 50 to the mobile phone 1 either in a separate character set file created at the central station 50 or together with a text file generated at the central station 50. As the character set data are assigned to a language, respectively, whereby the assignment of the character set data to the corresponding language is stored in the header 20, they may be stored in the corresponding second, third, or fourth memory location 30, 31, 32 together with the text data. It is also possible to store the character set data adjacent to the text data of the assigned language, especially in the free memory space 60 of the memory area 15.

The character set data may be coded by means of a bitmap or accessed via a translation table. It is possible to select different character set data, i.e. to modify character set data for text data of the same language and to transmit and to store these character set data as described above. In this way, it is possible to change the appearance of the characters of on and the same language according to the wishes of the user. Character set data may also be used or reused for text data of more than one language.

## Claims

1. Method for updating data in an electrical device (1) comprising a man machine interface (5) and a memory unit (10) providing a predefined memory area (15) to store there updated data of a file being generated with a header (20) and transmitted to the electrical device (1), **characterized by** generating the file with a header (20) containing address information addressing at least one memory location (30, 31, 32) to be updated of the predefined memory area (15) containing at least two memory locations (30, 31, 32) being sequentially arranged in the predefined memory area (15) for storing data groups of different languages, and identification information for identifying the selected language of the at least one data group (25, 26, 27, 28) to be updated, transmitting said generated file to the electrical device (1), and storing each data group (25, 26, 27, 28) of different language to be updated of the file in the at least two memory locations (30, 31, 32) of the predefined memory area (15) according to the address information in the header (20).

2. Method according to claim 1, **characterized in that** the data group (25, 26, 27, 28) is a text data group and/or a character set data group.

3. Method according to one of the preceding claims, **characterized in that** the step of generating the file further comprises the provision of language information data as identification data comprising a number and/or list of languages, and a language pointer to an array of at least two addresses addressing the at least two memory locations (30, 31, 32) of the memory area (15) for storage of the data groups (25, 26, 27, 28) of different languages, whereby in each memory location (30, 31, 32) at least one data group of only one language is stored.

4. Method according to claim 3, **characterized in that** the provision of language information data in the header (20) also includes the provision of a character set for the language used by each corresponding at least one data group (25, 26, 27, 28).

5. Method according to any one of the preceding claims, **characterized in that** free memory space (60) is provided between at least two memory locations (30, 31, 32) containing the data groups of different languages.

6. Method according to claim 5, **characterized in that** a character set data is stored in the free memory space (60) adjacent to the memory location (31) of the data group of the assigned language. ,

7. Method according to any one of the preceding claims, **characterized in that** the file is transmitted via an air interface (35, 40) and/or cable (45) from a central station (50) to the electrical device (1).

8. Method according to any one of the preceding claims, **characterized in that** the file is downloaded from a Personal Computer (50) to the electrical device (1).

9. Method according to any one of the preceding claims, **characterized in that** the file is transmitted to the electrical device (1) via a telecommunications network (55).

10. Electrical device (1) comprising a man machine interface (5) and a memory unit (10), providing a predefined memory area (15) to store there updated data of at least one file being generated with a header and transmitted to the electrical device (1) **characterized in that** the predefined memory area (15) comprises a first memory location (33) for storing identification information of the header (20) of the file being transmitted to the electrical device (1) for identifying the selected language of at least one data group to be updated, and at least two second memory locations (30, 31, 32) being sequentially arranged in the predefined memory area (15) for storing data groups of different languages being transmitted by the at least one file and being addressed by address information in the header of the at least one transmitted file.

11. Electrical device according to claim 10, **characterized in that** the data group (25, 26, 27, 28) is a text data group and/or a character set data group.

12. Electrical device according to any one of claims 10 or 11, **characterized in that** the first memory location (33), contains language information data as identification data comprising a number and/or a list of languages and a language pointer to an address array of at least two addresses addressing the at least two second memory locations (30, 31, 32) of the memory area (15) for storage of the data groups (25, 26, 27, 28) of different languages, whereby in each memory location (30, 31, 32) at least one data group of only one language is stored.

13. Electrical device according to any one of claims 10 to 12, **characterized in that** free memory space (60) is provided between the two second memory locations (30, 31, 32) containing data of different languages and being arranged sequentially in the memory area (15).

## Patentansprüche

1. Verfahren zum Aktualisieren von Daten in einer elektrischen Einrichtung (1), welche eine Mensch-Maschine-Schnittstelle (5) und eine Speichereinheit (10) umfasst und welche einen vorab definierten Speicherbereich (15) vorsieht, um darin aktualisierte Daten einer Datei zu speichern, die mit einem Kopfteil (20) erzeugt und an die elektrische Einrichtung (1) übertragen wird, **dadurch gekennzeichnet, dass** die Datei mit einem Kopfteil (20) erzeugt wird, der Adressinformationen enthält, welche mindestens einen zu aktualisierenden Speicherort (30, 31, 32) des Speicherbereichs (15) adressieren, der mindestens zwei Speicherorte (30, 31, 32) umfasst, welche in dem vorab definierten Speicherbereich (15) sequenziell angeordnet sind, um Datengruppen verschiedener Sprachen sowie Identifikationsinformationen zur Identifizierung der ausgewählten Sprache der mindestens einen zu aktualisierenden Datengruppe (25, 26, 27, 28) zu speichern, sowie **dadurch**, dass die besagte erzeugte Datei an die elektrische Einrichtung (1) übertragen wird und dass jede Datengruppe (25, 26, 27, 28) der verschiedenen zu aktualisierenden Sprachen der Datei an den mindestens zwei Speicherorten (30, 31, 32) des vorab definierten Speicherbereichs (15) entsprechend den Adressinformationen im Kopfteil (20) gespeichert wird.

2. Verfahren gemäß Anspruch 1, **dadurch gekennzeichnet, dass** die Datengruppe (25, 26, 27, 28) eine Textdatengruppe und/oder eine Zeichensatzdatengruppe ist.

3. Verfahren gemäß einem der vorstehenden Ansprüche, **dadurch gekennzeichnet, dass** der Schritt des Erzeugens der Datei ferner die Bereitstellung von Sprachinformationsdaten als Identifikationsinformationen umfasst, welche eine Nummer und/oder eine Liste der Sprachen enthalten, sowie einen Sprachzeiger auf ein Datenfeld von mindestens zwei Adressen, die mindestens zwei Speicherorte (30, 31, 32) des Speicherbereichs (15) adressieren, um Datengruppen (25, 26, 27, 28) verschiedener Sprachen zu speichern, wobei an jedem Speicherort (30, 31, 32) mindestens eine Datengruppe jeweils nur einer Sprache gespeichert ist.

4. Verfahren gemäß Anspruch 3, **dadurch gekennzeichnet, dass** die Bereitstellung von Sprachinformationsdaten im Kopfteil (20) darüber hinaus die Bereitstellung eines Zeichensatzes für die Sprache beinhaltet, der von jeder der entsprechenden mindestens einen Datengruppen (25, 26, 27, 28) verwendet wird.

5. Verfahren gemäß einem der vorstehenden Ansprüche, **dadurch gekennzeichnet, dass** freier Speicherplatz (60) zwischen mindestens zwei Speicherorten (30, 31, 32) bereitgestellt wird, die die Datengruppen verschiedener Sprachen enthalten.

6. Verfahren gemäß Anspruch 5, **dadurch gekennzeichnet, dass** Zeichensatzdaten in dem freien Speicherplatz (60) gespeichert werden, der an den Speicherort (31) der Datengruppe der zugewiesenen Sprache angrenzt.

7. Verfahren gemäß einem der vorstehenden Ansprüche, **dadurch gekennzeichnet, dass** die Datei über eine Luftschnittstelle (35, 40) und/oder ein Kabel (45) von einer Zentralstation (50) an die elektrische Einrichtung (1) übertragen wird.

8. Verfahren gemäß einem der vorstehenden Ansprüche, **dadurch gekennzeichnet, dass** die Datei von einem PersonalComputer (50) auf die elektrische Einrichtung (1) heruntergeladen wird.

9. Verfahren gemäß einem der vorstehenden Ansprüche, **dadurch gekennzeichnet, dass** die Datei über ein Telekommunikationsnetz (55) an die elektrische Einrichtung (1) übertragen wird.

10. Elektrische Einrichtung (1), welche eine Mensch-Maschine-Schnittstelle (5) und eine Speichereinheit (10) umfasst und welche einen vorab definierten Speicherbereich (15) vorsieht, um darin aktualisierte Daten mindestens einer Datei zu speichern, die mit einem Kopfteil (20) erzeugt und an die elektrische Einrichtung (1) übertragen wird, **dadurch gekennzeichnet, dass** der vorab definierte Speicherbereich (15) einen ersten Speicherort (33) umfasst, an dem Identifikationsinformationen des Kopfteils (20) der an die elektrische Einrichtung (1) übertragenen Datei gespeichert sind, welche die ausgewählte Sprache mindestens einer zu aktualisierenden Datengruppe identifizieren, sowie mindestens zwei zweite Speicherorte (30, 31, 32), die in dem vorab definierten Speicherbereich (15) sequenziell angeordnet sind, um Datengruppen verschiedener Sprachen zu speichern, die durch die mindestens eine Datei übertragen werden und die durch die Adressinformationen im Kopfteil der mindestens einen übertragenen Datei adressiert werden.

11. Elektrische Einrichtung gemäß Anspruch 10, **dadurch gekennzeichnet, dass** die Datengruppe (25, 26, 27, 28) eine Textdatengruppe und/oder eine Zeichensatzdatengruppe ist.

12. Elektrische Einrichtung gemäß einem der Ansprüche 10 oder 11, **dadurch gekennzeichnet, dass** der erste Speicherort (33) Sprachinformationsdaten als Identifikationsinformationen enthält, welche eine Nummer und/oder eine Liste der Sprachen umfassen sowie einen Sprachzeiger auf ein Datenfeld mit mindestens zwei Adressen, welche auf die mindestens zwei zweiten Speicherorte (30, 31, 32) des Speicherbereichs (15) verweisen, um die Datengruppen (25, 26, 27, 28) verschiedener Sprachen zu speichern, wobei an jedem Speicherort (30, 31, 32) mindestens eine Datengruppe jeweils nur einer Sprache gespeichert ist.

13. Elektrische Einrichtung gemäß einem der Ansprüche 10 bis 12, **dadurch gekennzeichnet, dass** freier Speicherplatz (60) zwischen den beiden zweiten Speicherorten (30, 31, 32), die die Daten verschiedener Sprachen enthalten und im Speicherbereich (15) sequenziell angeordnet sind, bereitgestellt wird.

## Revendications

1. Procédé de mise à jour de données dans un dispositif électrique (1) comprenant une interface homme-machine (5) et une unité de mémoire (10) disposant d'une zone de mémoire prédéfinie (15) pour y stocker des données mises à jour d'un fichier produit avec un en-tête (20) et transmis au dispositif électrique (1), **caractérisé par** la production du fichier avec un en-tête (20) contenant des informations d'adresse adressant au moins un emplacement de mémoire (30, 31, 32) devant être mis à jour de la zone de mémoire prédéfinie (15) contenant au moins deux emplacements de mémoire (30, 31, 32) disposés consécutivement dans la zone de mémoire prédéfinie (15) pour stocker des groupements de données de langues différentes, et des informations d'identification pour identifier la langue sélectionnée de l'au moins un groupement de données (25, 26, 27, 28) devant être mis à jour, la transmission dudit fichier produit au dispositif électrique (1), et le stockage de chaque groupement de données (25, 26, 27, 28) de langue différente devant être mis à jour du fichier dans les au moins deux emplacements de mémoire (30, 31, 32) de la zone de mémoire prédéfinie (15) conformément aux informations d'adresse dans l'en-tête (20).

2. Procédé selon la revendication 1, **caractérisé en ce que** le groupement de données (25, 26, 27, 28) est un groupement de données textuelles et/ou un groupement de données de jeu de caractères.

3. Procédé selon l'une des revendications précédentes, **caractérisé en ce que** l'étape de production du fichier comprend en outre la fourniture de données d'information de langue en tant que données d'identification comprenant un nombre et/ou une liste de langues, et un pointeur de langue sur une matrice d'au moins deux adresses adressant les au moins deux emplacements de mémoire (30, 31, 32) de la zone de mémoire (15) pour le stockage des groupements de données (25, 26, 27, 28) de langues différentes, moyennant quoi au moins un groupement de données d'une seule langue est stocké dans chaque emplacement de mémoire (30, 31, 32).

4. Procédé selon la revendication 3, **caractérisé en ce que** la fourniture de données d'information de langue dans l'en-tête (20) comprend également la fourniture d'un jeu de caractères pour la langue utilisée par chaque au moins un groupement de données (25, 26, 27, 28) correspondant.

5. Procédé selon l'une quelconque des revendications précédentes, **caractérisé en ce que** de l'espace mémoire libre (60) est prévu entre au moins deux emplacements de mémoire (30, 31, 32) contenant les groupements de données de langues différentes.

6. Procédé selon la revendication 5, **caractérisé en ce que** des données de jeu de caractères sont stockées dans l'espace mémoire libre (60) adjacent à l'emplacement de mémoire (31) du groupement de données de la langue attribuée.

7. Procédé selon l'une quelconque des revendications précédentes, **caractérisé en ce que** le fichier est transmis depuis une station centrale (50) au dispositif électrique (1) par l'intermédiaire d'une interface hertzienne (35, 40) et/ou d'un câble (45).

8. Procédé selon l'une quelconque des revendications précédentes, **caractérisé en ce que** le fichier est téléchargé d'un ordinateur personnel (50) au dispositif électrique (1).

9. Procédé selon l'une quelconque des revendications précédentes, **caractérisé en ce que** le fichier est transmis au dispositif électrique (1) par l'intermédiaire d'un réseau de télécommunications (55).

10. Dispositif électrique (1) comprenant une interface homme-machine (5) et une unité de mémoire (10), disposant d'une zone de mémoire prédéfinie (15) pour y stocker des données mises à jour d'au moins un fichier produit avec un en-tête et transmis au dispositif électrique (1), **caractérisé en ce que** la zone de mémoire prédéfinie (15) comprend un premier emplacement de mémoire (33) pour stocker des informations d'identification de l'en-tête (20) du fichier transmis au dispositif électrique (1) pour identifier la langue sélectionnée d'au moins un groupement de données devant être mis à jour, et au moins deux seconds emplacements de mémoire (30, 31, 32) disposés consécutivement dans la zone de mémoire prédéfinie (15) pour stocker des groupements de données de langues différentes transmis par l'au moins un fichier et adressés par les informations d'adresse dans l'en-tête de l'au moins un fichier transmis.

11. Dispositif électrique selon la revendication 10, **caractérisé en ce que** le groupement de données (25, 26, 27, 28) est un groupement de données textuelles et/ou un groupement de données de jeu de caractères.

12. Dispositif électrique selon l'une quelconque des revendications 10 ou 11, **caractérisé en ce que** le premier emplacement de mémoire (33) contient des données d'information de langue en tant que données d'identification comprenant un nombre et/ou une liste de langues et un pointeur de langue sur une matrice d'adresse d'au moins deux adresses adressant les au moins deux seconds emplacements de mémoire (30, 31, 32) de la zone de mémoire (15) pour le stockage des groupements de données (25, 26, 27, 28) de langues différentes, moyennant quoi au moins un groupement de données d'une seule langue est stocké dans chaque emplacement de mémoire (30, 31, 32).

13. Dispositif électrique selon l'une quelconque des revendications 10 à 12, **caractérisé en ce que** de l'espace mémoire libre (60) est prévu entre les deux seconds emplacements de mémoire (30, 31, 32) contenant des données de langues différentes et disposés consécutivement dans la zone de mémoire (15).
